# EUROPEAN PATENT SPECIFICATION

(11) **EP 3 307 590 B1**
(45) Date of publication and mention of the grant of the patent: **07.08.2019**
(21) Application number: 15742084.5
(22) Date of filing: 22.06.2015
(51) Int. Cl.: B60R 11/02, G02B 27/01

(54) **KINEMATIC MECHANISM FOR A HEAD-UP DISPLAY**
KINEMATISCHER MECHANISMUS FÜR EIN HEAD-UP-DISPLAY
MÉCANISME CINÉMATIQUE POUR UN PROJECTEUR À AFFICHAGE TÊTE HAUTE

(30) Priority: 11.06.2015 PT 2015108547
(43) Date of publication of application: 18.04.2018
(73) Proprietor: Bosch Car Multimedia Portugal, S.A., 4705-820 Braga (PT); Universidade do Minho, 4704-553 Braga (PT)
(72) Inventor: FERREIRA MONTEIRO, Pedro Miguel, P-4705-820 Braga (PT); AZEVEDO MOREIRA, Pedro Manuel, P-4705-820 Braga (PT); DA SILVA MOREIRA, Pedro Filipe, P-4705-820 Braga (PT); LOUREIRO DA COSTA, André Filipe, P-4705-820 Braga (PT); NUNES DOS SANTOS CABRAL, Jorge Miguel, P-4800-058 Guimarães (PT); MACHADO DA ROCHA, Luis Alexandre, P-4800-058 Guimarães (PT)
(74) Representative: Slickers, Dirk
(86) International application number: PCT/IB2015/054667
(87) International publication number: WO 2016/198924

(56) References cited:
- JP-A- 2012 254 708
- KR-B1- 101 319 587

## Description

### Technical field

The present disclosure relates to a kinematic mechanism for a head-up display (HUD) device, in particular for a combiner head-up display (C-HUD) for automotive applications. In particular, the invention relates to a head-up display device with a retractable combiner to be coupled to an instrument panel and configured to display vehicle information, navigation information among other relevant data.

### Background Art

Head-up-display systems (HUD) are nowadays largely used in the automotive industry. There are different types of HUD systems: Combiner head-up display (C-HUD), Augmented Reality head-up display (AR-HUD) and windshield head-up display (W-HUD).

The C-HUD systems are generally composed by a combiner, a picture generating unit, a kinematic mechanism and a cover. The combiner is a translucent display where the information is projected for driver's visualization. The HUD systems allow the drivers to view important data like for example, speed, GPS indications, fuel consumptions, among others, without taking their eyes from the road. The systems with combiner (C-HUD) need to have the capability to protect the combiner when is not in use. The typical solution is to store the combiner inside the unit and preferably close the gap with a cover.

The AR-HUD systems are more complex systems and the information is typically projected into a larger area of the windshield. These systems generate a virtual image projection and allow an interaction with the real scenario in front of the driver.

The W-HUD systems are quite similar to the C-HUD, but in this case the projection is made on a smaller area of the windshield instead of using a combiner.

The movement of the combiner can be made with different trajectories: rotation of the combiner (documents JP 2012-254708 and EP 2541303) and translation/rotation of the combiner. The translation/rotation can be defined by almost vertical trajectory (documents WO 2013168396, WO 2013059662, US 20140320382 and US 20120188650), horizontal (documents US 20130194518, US008077396B2, US007978414B2 and US007869129B2) and also diagonal (document WO20131572389 or document DE102012209111).

The movement described in the document WO2014168044 is basically characterized by a lateral rotation of the combiner.

Some of C-HUD systems possess a cover in order to protect the combiner, when it is in park position. Therefore, in this situation the kinematic mechanism should allow the movement of these two components. This kind of solutions can be found in documents WO2014168044, WO2013168396, WO2013059662, JP2012254708, WO2013146161 and EP2541303.

The cover system presented in document WO2014168044 is composed by two parts, overlapping each other when the combiner is in park position. The trajectories of the two covers is guaranteed by a system composed by bars, gears and a motor, at the same time the combiner is moved.

In the document WO2013168396 the combiner is moved vertically along a worm gear coupled to a stepper motor. The cover movement is guaranteed by the movement of the combiner, when the combiner is moving up, the cover is pushed down to allow the combiner to pass. In the opposite direction the cover goes up to close the gap where the combiner goes through. The mechanical concept presented in the document WO2013168396 implies a vertical movement of the combiner. The solution described in document WO2013168396 requires more volume to operate. It seems that this solution does not allow angular adjustment, when it is in display position. Additionally, uses a stepper motor and probably is a system with higher noise levels and a slower system. The cover presents a dumper movement instead of a translating/rotating solution.

In the kinematic system described in document WO2013059662, the movement of the combiner between park and display position is almost vertical. This movement is ensured using one or two cam-wheels. These cam-wheels are not only responsible for the combiner guidance along its trajectory, but also to control the movement of a small cover that will fulfil the gap presented in the dashboard. The kinematic solution of the present disclosure does not have cam wheels. The pins presented in cam wheels can lead to risk of blockage and high noise levels. For angle adjustment, the kinematic system described in WO2013059662 is ensured with resource to an extra feature presented in cam wheel lateral side. This angular adjustment is achieved when the support combiner contacts the slope in the cam wheel. Additionally, the cover has smaller dimensions and is only responsible for protecting the combiner when it is in park position. The kinematic system of the present disclosure not only protects the combiner but also ensures the total coverage of C-HUD unit. The total coverage of the C-HUD unit avoids the dust entrance and makes the unit more robust to misuse cases.

The document JP2012254708 introduces a HUD with a two cover part. When the combiner moves from park to display position, the two cover components rotates and keep stored inside the HUD unit. The combiner is connected to one of the cover parts and its movement is rotational.

The invention presented in document WO2013/146161 describes a combiner drive mechanism, responsible for the combiner motion between a stored position and a display position. The combiner drive mechanism is based on a four bar linkage. This HUD system is composed by: a combiner support for holding the combiner, a bar (lever) that can rotate about a shaft and is positioned at one end of the bar and the other extremity is connected to the support combiner. There is a second shaft also positioned at the end of the bar and to the support. The first bar is the motor bar and the second bar is the moved bar, only responsible to guide the combiner support and combiner along the movement between park and store position, through a translating/rotating movement.

Document EP 2 541303 relates to a HUD system that contains a combiner, a cover and a gear mechanism responsible for simultaneously rotate the cover and combiner. When the combiner is in display position, the cover stays parked inside the central box and when the combiner is in park position the cover will stay above the combiner. This mechanism makes possible to expose the combiner when it is to display information in the combiner and the cover is hidden inside the box. On the other hand, when the combiner is not needed, a cover will protect by means of a cover. The angular trajectory of the cover and combiner is approximately 90°. The gear mechanism consists of a planetary gear comprising a sun gear coupled to the combiner, and a ring gear segment coupled to the plant gear. The planetary gear mechanism has some disadvantages such as: high noise levels, early wear and high cost if low backlash and long life is required, like in this case. Some technical issues are not described in this document such as: the coupling structure between the cover and the sun gear, cover trajectory and combiner angular adjustment. This structure should allow the rotation of the sun gear that causes the movement of the cover relatively to the combiner. Thereby the gear mechanism is driven by one stepper motor that transfers the motor force to the combiner and cover to cause the simultaneous movement of them. The planetary gearing is responsible for the cover and combiner movement via a drive shaft.

The KR 101 319 587 B1 describes a Projection unit.

These facts are disclosed in order to illustrate the technical problem addressed by the present disclosure.

### General Description

The present invention includes a kinematic mechanism for combiner and/or other displays wherein the mechanism moves simultaneously the combiner unit and the protective cover using just one motor (preferably DC motor).

According to embodiments of the disclosure, the combiner movement between retracted position and display position (extended position) can be completed between 3 and 6 seconds and vice-versa.

When the combiner is in display position, it allows an angular adjustment. The angular adjustment of the combiner allows setting the position of the information into the combiner. This angular adjustment is related with ergonomic standards in order to adapt the information position with different driver's height. This adjustment can be ensured by means of a motor resolution. The motor is permanently connected to combiner gear axis and consequently the angular adjustment is made by the number of revolution of the motor. The driver may then have a manual switch to set the ideal projected information. This has the advantage that the same movement of rotation into the display position of the combiner is used for adjusting its position, making the mechanism and the control electronics both simpler to build and operate.

The chassis allows a sequential assembly of the other components (kinematic, Printed Circuit Board and Optical elements) outside of the unit package. This concept imposes a better structural stiffness to the system, avoiding some problems related with package deformations and outside vibrations. The modular concept of this chassis is advantageous, enabling the use of this concept in different C-HUD units.

The synchronized movement of combiner and cover is preferably ensured by a system that possesses a pin on the cover gear and a slot on the Geneva gear. When the pin travels along the Geneva gear slot, this makes the cover gear rotate together with the combiner gear and support.

This part-synchronization movement could also be done with other kind of synchronization mechanisms, such as special gear trains (e.g partially toothed gear for distinguishing between two movements), bars linked to a camwheel (for obtaining two movements between a circular path and a non-circular path), ratchet pawl system (for obtaining two movements between a ratcheted and a non-ratcheted movement sections), clutch (for obtaining two movements between an engaged and a non-engaged movement sections) or with an additional actuator (e.g. solenoid or linear actuator) for engaging a second movement.

For an embodiment using special gears the special gears have intermittent sectors with and without teeth in order to allow the two different movements (cover movement and cover/combiner movement).

This movement can also be done with resource to an embodiment using camwheels linked to the cover and connected to several bars that are responsible for combiner rotation. The paths existent in camwheels will ensure the correct synchronization.

For an embodiment using ratchet pawl, the ratchet pawl with simple features can also allow the desired behavior of the mechanism. When the pawl is coupled to a tooth that belongs to the gear, the pawl will rotate the combiner.

The synchronization movement can also be implemented using an embodiment with a clutch that engages and disengages the parts needed to move the combiner.

A further embodiment may use an additional actuator which can be applied to the system in order to ensure the different movements of the head-up display kinematic system.

The C-HUD systems are typically composed by highly complex kinematic mechanisms responsible for combiner motion between the retracted position and the display/extended position. The mechanisms should ensure the repeatable positional accuracy because an incorrect position of the combiner causes image distortions in the combiner. The optic elements are very sensitive to small displacements which lead to imperfect image projection in the combiner and the different parts of the kinematics should be manufactured taking into account close tolerances. However, the need for so demanding tolerances has the immediate effect of increasing the costs associated with the manufacturing.

The design of these systems usually requires a very careful design to ensure excellent quality parameters. Most of the time, the technical specifications are related with kinematic noise levels, exposure to high temperatures, humidity and undesirable vibrations. The package of the C-HUD system usually is dependent of several parameters of dashboard components position like instrumentation cluster and air conditioning pipes. Moreover, when a C-HUD system is assembled in a dashboard, it should be expectable the existence of a protective cover in order to avoid any damage to the combiner. Another important issue is the possibility to adjust the combiner angular position when it is in display/extended position. With this, the C-HUD system can be capable of adapting to different driver heights.

The present disclosure includes a kinematic system to be used in C-HUD systems or other displays, that comprises a combiner (1) and a protective cover (2), wherein the combiner is movable between a retracted position and a display/extended position through a gear movement transmission. The movement is made by a motor, preferably DC motor, coupled to a gearbox in order to increase the resolution of the movement. A cover gear is coupled to the gearbox and they are not only directly connected to the motor bars, but also have a pin to move the Geneva gear when is necessary. The cover is linked to the motor bars and moved bars. These bars allow the cover motion together with the cover gear. The moved bars set the trajectory and stabilize the cover movement.

The synchronized movement of combiner and cover is ensured by the existent pin on cover gear and the Geneva gear slot. When the pin travels along the Geneva gear slot, it makes the cover gear rotate together with the combiner gear and respective support.

Starting in retractable position, the first step is to start the opening of the cover. In this moment only the cover is in movement and the combiner remains parked inside. After the cover reaches a pre-defined position, the movement is also applied to the combiner and the two parts stop when they reach the service position. In this position is possible to adjust the combiner angle for a better visualization angle. In this position, the ratio of the movement of the motor, and respective gearbox, to the movement of the combiner is particularly important for providing a fine tuning of the combiner display position. When the system is no longer needed, the kinematic mechanism starts the process to close and store the combiner unit.

It is disclosed a kinematic mechanism for a head-up display, HUD, wherein said HUD comprises a HUD image combiner and a HUD protective cover, said mechanism comprising:
a cover gear for opening and closing the HUD protective cover;
a combiner gear for moving the HUD image combiner between a retracted position and an image display position;
a motor arranged to drive the cover gear;
a Geneva gear arranged in cooperation with the combiner gear such that continuous rotary motion of the cover gear is translated into an intermittent rotary motion of the Geneva gear;
wherein the Geneva gear and the combiner gear are the same gear or are intermeshing gears.

In an embodiment, the Geneva gear and the combiner gear are intermeshing gears and the combiner gear is a rack or a circular gear.

In an embodiment, the geometry of the contact between the cover and Geneva gears is such that, when continuous rotary motion of the cover gear is not being translated into rotary motion of the Geneva gear, the Geneva gear is blocked from rotating by said geometry.

In an embodiment, the motor is arranged to drive the cover gear through a gearbox.

In an embodiment, the combiner is directly attached to the combiner gear.

In an embodiment, the combiner is attached to the combiner gear, for movement of the combiner, by a bar or a linkage.

In an embodiment, the cover is directly attached to the cover gear.

In an embodiment, the cover is attached to the cover gear, for movement of the cover, by a bar or a linkage.

In an embodiment, the Geneva gear is arranged in cooperation with the combiner gear such that continuous rotary motion of the cover gear is translated into an intermittent rotary motion of the Geneva gear, said motion comprising two consecutive sections:
a first section wherein the cover gear rotates and the Geneva gear is static, for opening and closing the HUD protective cover;
a second section wherein the both the cover gear and the Geneva gear rotate, for opening and closing the HUD protective cover and for moving the HUD image combiner between a retracted position and an image display position.

In an embodiment, the Geneva gear comprises radial slots and the cover gear comprises a pin for slotting into said slots such that the rotary motion of the cover gear is translated into an intermittent rotary motion of the Geneva gear.

In an embodiment, the Geneva gear is arranged in cooperation with the combiner gear such that when the combiner is in the image display position, the cover gear pin rests substantially at the exterior end of the slot of the Geneva gear.

It is also disclosed a head-up display, HUD, comprising a HUD image combiner, a HUD protective cover, and a kinematic mechanism for a head-up display according to any one of the described embodiments.

In an embodiment the head-up display, HUD, comprises an additional kinematic mechanism according to any one of the described, and a motor shaft coupling the cover gears of the two kinematic mechanisms, wherein said kinematic mechanisms are arranged laterally and symmetrically in respect of each other.

In an embodiment, the head-up display, HUD, comprises a stabilization shaft coupling the Geneva gears of the two kinematic mechanisms, or a stabilization shaft coupling the combiner gears of the two kinematic mechanisms.

In an embodiment the head-up display, HUD, comprises an additional kinematic mechanism according to any one of the described, a motor shaft coupling the cover gears of the two kinematic mechanisms, and a motor shaft coupling the Geneva gears of the two kinematic mechanisms, wherein the Geneva gear and the cover gear of said additional kinematic mechanism are arranged to be devoid of the intermittent rotary motion, wherein the geometry of the contact between the cover and Geneva gears is such that, when continuous rotary motion of the cover gear is not being translated into rotary motion of the Geneva gear by the first kinematic mechanism, the Geneva gear of the additional kinematic mechanism is blocked by said geometry, wherein said kinematic mechanisms are arranged laterally and symmetrically in respect of each other.

In an embodiment, the head-up display, HUD, is a combiner head-up display, C-HUD.

In an embodiment, the head-up display, HUD, is an automotive combiner head-up display, C-HUD.

It is also disclosed a motor vehicle dashboard comprising the head-up display, HUD, according to any one of the described embodiments.

### Brief Description of the Drawings

The following figures provide preferred embodiments for illustrating the description and should not be seen as limiting the scope of invention.
**Figure 1:** Schematic representation of an embodiment of the complete kinematic mechanism for a C-HUD system (isometric view).
**Figure 2:** Schematic representation of an embodiment of the kinematic transmission mechanism; (a) display position and (b) park position.
**Figure 3:** Schematic representation of an embodiment of the cross sectional view; (a) Right view park position; (b) Left view display position.
**Figure 4:** Schematic representation of the block diagram of an embodiment.
**Figure 5:** Schematic representation of the behaviour flow chart of an embodiment.

### Detailed Description

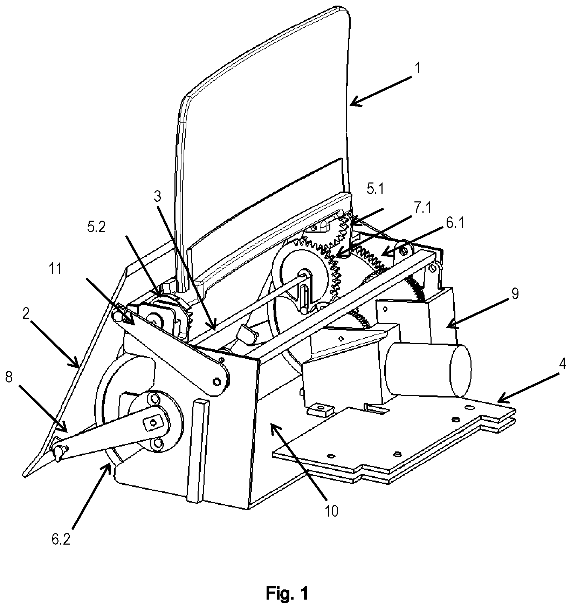

Figure 1 depicts an isometric view of entire kinematic mechanism suitable to be used in combiner and/or other displays. One of the most relevant components of this kinematic mechanism is the chassis (10). One of the advantages to use this kind of structures is to allow the assembly of other components (PCB, Picture Generate Unit, Heat sink among others). The PCB (4) can be found in Figure 1 attached to the chassis structure.

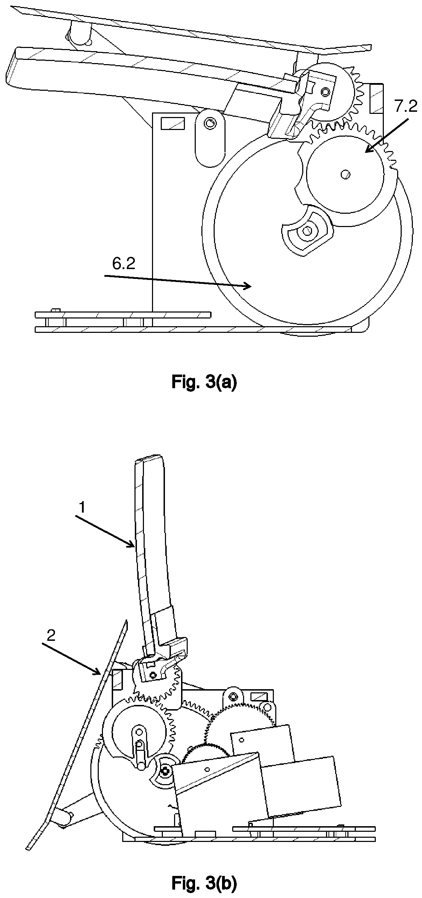

On the right side of the chassis (Figure 3b) is attached the kinematic transmission mechanism that was presented before (Figure 1). In order to establish a symmetric movement, an equivalent kinematic transmission mechanism is also attached to the chassis in the left side (Figure 3a).

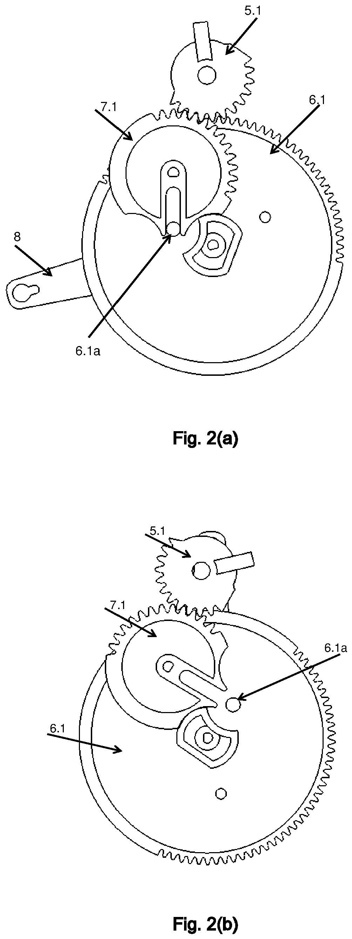

Figure 2 presents the kinematic mechanism responsible for gear movement transmission. This mechanism allows the synchronized movement of combiner unit (1) and protective cover (2). This system ensures a complete travel path of the components described before with a smooth movement. Collisions or package interferences are not verified using this kinematic mechanism. Combiner gear (5.1) is responsible for combiner rotation, cover gear (6.1) is connected to the gear box and allows not only the cover movement but also the combiner movement. The combiner unit (1) rotates when pin (6.1a) travels along the Geneva gear (7.1) slot. The cover gear (6.1) rotation defines cover (2) displacement. The motor bar (8) is attached to cover gear (6.1) and is responsible for cover (2) movement. The motor bar (8) is responsible for the movement transmission between motor unit (9) and cover (2). There is also a move bar (11) responsible for cover (2) guidance through its trajectory.

In display/extended position (Figure 2a), the pin (6.1a) that belongs to the cover gear (6.1) and the Geneva gear (7.1) are responsible for blocking the combiner (1) motion. In the retractable position (Figure 2b), the cover gear (6.1) geometry and Geneva gear (7.1) geometry are responsible for blocking the combiner (1), due to the existent contact area between the gears described before. This mechanism operates in two different steps:
- cover movement (2) and the combiner unit (1) move simultaneously;
- cover movement (2) only, when the combiner unit (1) is in park position (Figure 2).

Preferably, in the display position, the cover gear pin rests near or at the extreme end of the slot of the Geneva gear (7.1) that cooperates with the pin to make the Geneva and combiner gears to rotate. This has the effect of providing a longer radial arm in respect of the Geneva gear rotation such that the lever effort of the pin is maximized and the movement of the combiner gear is minimized. The advantages are that the force blocking the combiner in place is maximized; and that the movement ratio between the motor rotation and the combiner movement enables a finer adjustment of the display position.

Cover gears (6.1 and 6.2) and Geneva gears (7.1 and 7.2) are connected by means of a pair of shaft (3), responsible for synchronized rotation. There are 2 motor bars (8) and 2 moved bars (11) attached to the lateral sides of the chassis (10), as shown in Figure 1 and 3. The cover (2) trajectory is defined by these two pair of bars. The cover trajectory is ensured by the kinematic of 4 bar mechanism. The bar lengths and their fixation points are relevant in order to obtain a proper movement without collisions, which is known to the skilled person.

There are at least 4 possible options to ensure the operation of the kinematic mechanism described in this disclosure (see Table 1), in particular in what respects the left/right lateral mechanisms. If two mechanisms are provided and arranged laterally for simultaneously moving the cover and for simultaneously moving the combiner, then a more robust and stable solution is obtained, having less potential misalignments.

In option 1 only the right side mechanism is presented and there is no left side mechanism, as well as the cover gear and Geneva gear shafts. The motor and gear box are always connected to the right side mechanism, which means that the transmission is placed in the right side. The right side mechanism is responsible not only for combiner movement but also for cover movement through two motor bars. This option could lead to undesirable consequences such as an asymmetric and desynchronized movement.

In order to ensure the symmetry of the movement, a second mechanism may be introduced in option 2, with a second cover gear and geneva gear (left side mechanism). The two lateral cover gears are connected by means of a shaft responsible for transmission movement between the left and right side mechanism. This option could lead to desynchronized movement, e.g. at the combiner, if the two Geneva gears are not following the same tolerances. There is also a risk of blockage and undesirable torsion moment in cover gear shaft.

In order to minimize the situations described in option 2, an additional shaft may be considered to connect the two geneva gears in option 3. This shaft will help to stabilize and synchronize the Geneva gear movement by coupling the Geneva gears (or combiner gears) between the two sides.

The option 4 may be implemented in the proposed kinematic mechanism and, in this embodiment, the Geneva gear presented in the left side mechanism does not possess slot and the cover gear does not include the pin. The existence of the Geneva gear without slot allows the combiner blockage but also helps in the movement symmetry and synchronization. This embodiment also saves part by dispensing with the pin and slot at the left side gears. There is also a cover gear shaft for movement transmission between the two cover gears and a Geneva gear shaft for synchronization and transmission purposes between the two Geneva gears.

**Table 1 - Embodiments for the mechanism left/right operating options**

| | **Right Side Mechanism** | **Left Side mechanism** | **Cover gear shaft** | **Geneva gear shaft** |
|---|---|---|---|---|
| 1 | Geneva Gear | None | None | None |
| 2 | Geneva Gear | Geneva Gear | With motor shaft | None |
| 3 | Geneva Gear | Geneva Gear | With motor shaft | With stabilization shaft |
| 4 | Geneva Gear | Geneva Gear without slot and Cover Gear without pin | With motor shaft | With motor shaft |

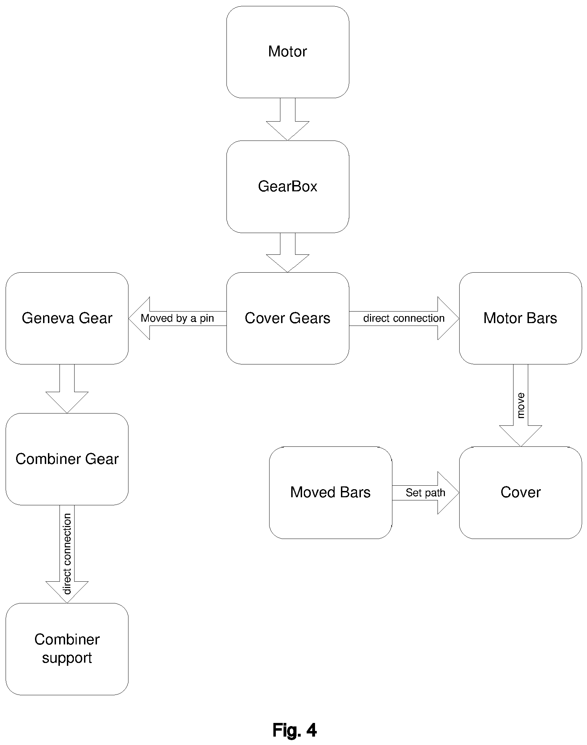

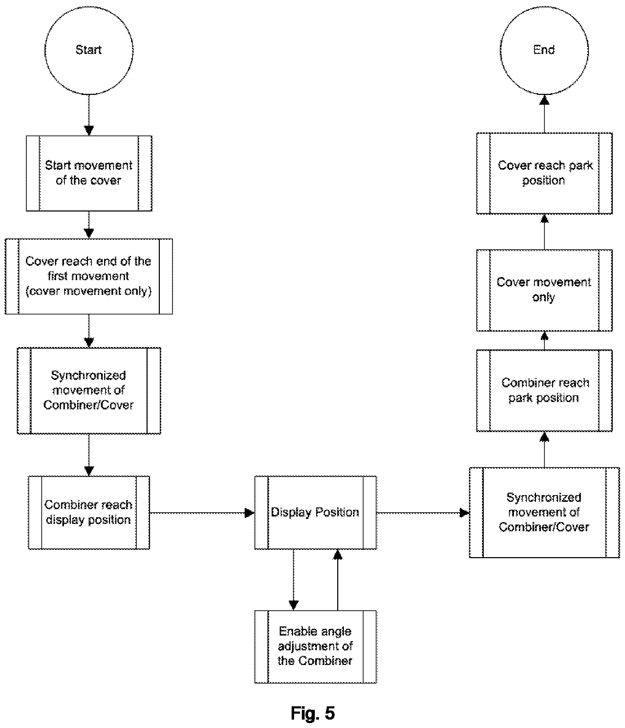

Figure 4 depicts a block diagram with the main parts of the mechanism and its interactions and functions according to an embodiment. Figure 5 represents the behavior of the kinematics system according to an embodiment.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. Kinematic mechanism for a head-up display, HUD, wherein said HUD comprises a HUD image combiner (1) and a HUD protective cover (2), said mechanism comprising:
a cover gear (6.1) for opening and closing the HUD protective cover (2);
a combiner gear (5.1) for moving the HUD image combiner (1) between a retracted position and an image display position;
a motor arranged to drive the cover gear (6.1);
**characterized in that**
a Geneva gear (7.1) arranged in cooperation with the combiner gear (5.1) such that continuous rotary motion of the cover gear (6.1) is translated into an intermittent rotary motion of the Geneva gear (7.1);
wherein the Geneva gear (7.1) and the combiner gear (5.1) are the same gear or are intermeshing gears.

2. Kinematic mechanism according to the previous claim wherein the Geneva gear (7.1) and the combiner gear (5.1) are intermeshing gears and the combiner gear (5.1) is a rack or a circular gear.

3. Kinematic mechanism according to any one of the previous claims wherein the geometry of the contact between the cover and Geneva gears (7.1) is such that, when continuous rotary motion of the cover gear (6.1) is not being translated into rotary motion of the Geneva gear (7.1), the Geneva gear (7.1) is blocked by said geometry.

4. Kinematic mechanism according to any one of the previous claims wherein the motor is arranged to drive the cover gear (6.1) through a gearbox.

5. Kinematic mechanism according to any one of the previous claims wherein the combiner is directly attached to the combiner gear (5.1).

6. Kinematic mechanism according to any one of the claims 1-4 wherein the combiner is attached to the combiner gear (5.1), for movement of the combiner, by a bar or a linkage.

7. Kinematic mechanism according to any one of the previous claims wherein the cover is directly attached to the cover gear (6.1).

8. Kinematic mechanism according to any one of the claims 1-6 wherein the cover is attached to the cover gear (6.1), for movement of the cover, by a bar or a linkage.

9. Kinematic mechanism according to any one of the previous claims wherein the Geneva gear (7.1) is arranged in cooperation with the combiner gear (5.1) such that continuous rotary motion of the cover gear (6.1) is translated into an intermittent rotary motion of the Geneva gear (7.1), said motion comprising two consecutive sections:
a first section wherein the cover gear (6.1) rotates and the Geneva gear (7.1) is static, for opening and closing the HUD protective cover (2);
a second section wherein both the cover gear (6.1) and the Geneva gear (7.1) rotate, for opening and closing the HUD protective cover (2) and for moving the HUD image combiner (1) between a retracted position and an image display position.

10. Kinematic mechanism according to any one of the previous claims wherein the Geneva gear (7.1) comprises radial slots and the cover gear (6.1) comprises a pin (6.4a) for slotting into said slots such that the rotary motion of the cover gear (6.1) is translated into an intermittent rotary motion of the Geneva gear (7.1).

11. Kinematic mechanism according to the previous claim wherein the Geneva gear (7.1) is arranged in cooperation with the combiner gear (5.1) such that when the combiner is in the image display position, the cover gear (6.1) pin (6.1a) rests substantially at the exterior end of the slot of the Geneva gear (7.1).

12. Head-up display, HUD, comprising a HUD image combiner (1), a HUD protective cover (2), and a kinematic mechanism for a head-up display according to any one of the previous claims.

13. Head-up display, HUD, according to the previous claim comprising an additional kinematic mechanism according to any one of the claims 1-11, and a motor shaft coupling the cover gears (6.1) of the two kinematic mechanisms, wherein said kinematic mechanisms are arranged laterally and symmetrically in respect of each other.

14. Head-up display, HUD, according to the previous claim, comprising:
a stabilization shaft coupling the Geneva gears (7.1) of the two kinematic mechanisms, or
a stabilization shaft coupling the combiner gears (5.1) of the two kinematic mechanisms.

15. Head-up display, HUD, according to claim 12, comprising
an additional kinematic mechanism according to any one of the claims 10-11,
a motor shaft coupling the cover gears (6.1) of the two kinematic mechanisms, and
a motor shaft coupling the Geneva gears (7.1) of the two kinematic mechanisms, wherein the Geneva gear (7.1) and the cover gear (6.1) of said additional kinematic mechanism are devoid of the slot and the pin (6.1a) of the Geneva mechanism, wherein said kinematic mechanisms are arranged laterally and symmetrically in respect of each other.

16. Head-up display, HUD, according to any of the claims 12-15 wherein the head-up display, HUD, is a combiner head-up display, C-HUD.

17. Head-up display, HUD, according to the previous claim wherein the head-up display, HUD, is an automotive combiner head-up display, C-HUD.

18. Motor vehicle dashboard comprising the head-up display, HUD, according to any of the claims 12 - 17.

## Patentansprüche

1. Kinematischer Mechanismus für ein Head-up-Display, HUD, wobei das HUD einen HUD-Bild-Combiner (1) und eine HUD-Schutzabdeckung (2) umfasst, wobei der Mechanismus Folgendes umfasst:
ein Abdeckungszahnrad (6.1) zum Öffnen und Schließen der HUD-Schutzabdeckung (2);
ein Combiner-Zahnrad (5.1) zum Bewegen des HUD-Bild-Combiners (1) zwischen einer zurückgezogenen Position und einer Bildanzeigeposition;
einen Motor, der angeordnet ist, um das Abdeckungszahnrad (6.1) anzutreiben;
**dadurch gekennzeichnet, dass**
ein Malteserkreuzrad (7.1) in Kooperation mit dem Combiner-Zahnrad (5.1) angeordnet ist, sodass kontinuierliche Drehbewegung des Abdeckungszahnrades (6.1) übersetzt wird in eine unterbrochene Drehbewegung des Malteserkreuzrades (7.1);
wobei das Malteserkreuzrad (7.1) und das Combiner-Zahnrad (5.1) das gleiche Zahnrad oder ineinandergreifende Zahnräder sind.

2. Kinematischer Mechanismus nach dem vorangehenden Anspruch, wobei das Malteserkreuzrad (7.1) und das Combiner-Zahnrad (5.1) ineinandergreifende Zahnräder sind und das Combiner-Zahnrad (5.1) eine Zahnstange oder ein rundes Zahnrad ist.

3. Kinematischer Mechanismus nach einem der vorangehenden Ansprüche, wobei die Geometrie des Kontakts zwischen der Abdeckung und den Malteserkreuzrädern (7.1) so ist, dass dann, wenn kontinuierliche Drehbewegung des Abdeckungszahnrades (6.1) nicht in Drehbewegung des Malteserkreuzrades (7.1) übersetzt wird, das Malteserkreuzrad (7.1) durch die Geometrie blockiert wird.

4. Kinematischer Mechanismus nach einem der vorangehenden Ansprüche, wobei der Motor angeordnet ist, um das Abdeckungszahnrad (6.1) durch ein Getriebe anzutreiben.

5. Kinematischer Mechanismus nach einem der vorangehenden Ansprüche, wobei der Combiner direkt an dem Combiner-Zahnrad (5.1) angebracht ist.

6. Kinematischer Mechanismus nach einem der Ansprüche 1-4, wobei der Combiner zur Bewegung des Combiners an dem Combiner-Zahnrad (5.1) durch eine Stange oder ein Gestänge angebracht ist.

7. Kinematischer Mechanismus nach einem der vorangehenden Ansprüche, wobei die Abdeckung direkt an dem Abdeckungszahnrad (6.1) angebracht ist.

8. Kinematischer Mechanismus nach einem der Ansprüche 1-6, wobei die Abdeckung zur Bewegung der Abdeckung durch eine Stange oder ein Gestänge an dem Abdeckungszahnrad (6.1) angebracht ist.

9. Kinematischer Mechanismus nach einem der vorangehenden Ansprüche, wobei das Malteserkreuzrad (7.1) in Kooperation mit dem Combiner-Zahnrad (5.1) angeordnet ist, sodass kontinuierliche Drehbewegung des Abdeckungszahnrades (6.1) in eine unterbrochene Drehbewegung des Malteserkreuzrades (7.1) übersetzt wird, wobei die Bewegung zwei aufeinanderfolgende Abschnitte umfasst:
einen ersten Abschnitt, in dem sich das Abdeckungszahnrad (6.1) dreht und das Malteserkreuzrad (7.1) statisch ist, zum Öffnen und Schließen der HUD-Schutzabdeckung (2);
einen zweiten Abschnitt, in dem sich sowohl das Abdeckungszahnrad (6.1) als auch das Malteserkreuzrad (7.1) drehen, zum Öffnen und Schließen der HUD-Schutzabdeckung (2) und zum Bewegen des HUD-Bild-Combiners (1) zwischen einer zurückgezogenen Position und einer Bildanzeigeposition.

10. Kinematischer Mechanismus nach einem der vorangehenden Ansprüche, wobei das Malteserkreuzrad (7.1) radiale Nuten umfasst und das Abdeckungszahnrad (6.1) einen Stift (6.4a) zum Einstecken in die Nuten umfasst, sodass die Drehbewegung des Abdeckungszahnrades (6.1) in eine unterbrochene Drehbewegung des Malteserkreuzrades (7.1) übersetzt wird.

11. Kinematischer Mechanismus nach einem der vorangehenden Ansprüche, wobei das Malteserkreuzrad (7.1) in Kooperation mit dem Combiner-Zahnrad (5.1) angeordnet ist, sodass dann, wenn sich der Combiner in der Bildanzeigeposition befindet, der Stift (6.1a) des Abdeckungszahnrades (6.1) im Wesentlichen auf dem äußeren Ende der Nut des Malteserkreuzrades (7.1) ruht.

12. Head-up-Display, HUD, umfassend einen HUD-Bild-Combiner (1), eine HUD-Schutzabdeckung (2) und einen kinematischen Mechanismus für ein Head-up-Display nach einem der vorangehenden Ansprüche.

13. Head-up-Display, HUD, nach dem vorangehenden Anspruch, umfassend einen zusätzlichen kinematischen Mechanismus nach einem der Ansprüche 1-11, und eine Motorwelle, die die Abdeckungsräder (6.1) der zwei kinematischen Mechanismen koppelt, wobei die kinematischen Mechanismen in Bezug zueinander seitlich und symmetrisch angeordnet sind.

14. Head-up-Display, HUD, nach dem vorangehenden Anspruch, umfassend:
eine Stabilisierungswelle, die die Malteserkreuzräder (7.1) mit den zwei kinematischen Mechanismen verbindet, oder
eine Stabilisierungswelle, die die Combiner-Räder (5.1) mit den zwei kinematischen Mechanismen verbindet.

15. Head-up-Display, HUD, nach Anspruch 12, umfassend:
einen zusätzlichen kinematischen Mechanismus nach einem der Ansprüche 10-11,
eine Motorwelle, die die Abdeckungsräder (6.1) der zwei kinematischen Mechanismen verbindet, und
eine Motorwelle, die die Malteserkreuzräder (7.1) der zwei kinematischen Mechanismen verbindet, wobei das Malteserkreuzrad (7.1) und das Abdeckungszahnrad (6.1) des zusätzlichen kinematischen Mechanismus frei von der Nut und dem Stift (6.1a) des Malteserkreuzmechanismus sind, wobei die kinematischen Mechanismen in Bezug zueinander seitlich und symmetrisch angeordnet sind.

16. Head-up-Display, HUD, nach einem der Ansprüche 12-15, wobei das Head-up-Display, HUD, ein Combiner-Head-up Display, C-HUD, ist.

17. Head-up-Display, HUD, nach dem vorangehenden Anspruch, wobei das Head-up-Display, HUD, ein Combiner-Head-up Display, C-HUD, für ein Automobil ist.

18. Kraftfahrzeug-Instrumentenanlage, umfassend das Head-up-Display, HUD, nach einem der Ansprüche 12-17.

## Revendications

1. Mécanisme cinématique pour un affichage tête haute, HUD, dans lequel ledit HUD comprend un combineur d'images d'HUD (1) et un couvercle protecteur d'HUD (2), ledit mécanisme comprenant :
un élément denté de couvercle (6.1) pour ouvrir et fermer le couvercle protecteur d'HUD (2) ;
un élément denté de combineur (5.1) pour déplacer le combineur d'images d'HUD (1) entre une position rentrée et une position d'affichage d'images ;
un moteur conçu pour entraîner l'élément denté de couvercle (6.1) ;
**caractérisé en ce**
**qu'**un élément denté en croix de Malte (7.1) est agencé en coopération avec l'élément denté de combineur (5.1) de telle sorte qu'un mouvement rotatif continu de l'élément denté de couvercle (6.1) soit transformé en un mouvement rotatif intermittent de l'élément denté en croix de Malte (7.1) ;
l'élément denté en croix de Malte (7.1) et l'élément denté de combineur (5.1) étant le même élément denté ou des éléments dentés s'engrenant.

2. Mécanisme cinématique selon la revendication précédente, dans lequel l'élément denté en croix de Malte (7.1) et l'élément denté de combineur (5.1) sont des éléments dentés s'engrenant et l'élément denté de combineur (5.1) est une crémaillère ou un élément denté circulaire.

3. Mécanisme cinématique selon l'une quelconque des revendications précédentes, dans lequel la géométrie du contact entre les éléments dentés de couvercle et en croix de Malte (7.1) est telle que, lorsque le mouvement rotatif continu de l'élément denté de couvercle (6.1) n'est pas transformé en mouvement rotatif de l'élément denté en croix de Malte (7.1), l'élément denté en croix de Malte (7.1) est bloqué par ladite géométrie.

4. Mécanisme cinématique selon l'une quelconque des revendications précédentes, dans lequel le moteur est conçu pour entraîner l'élément denté de couvercle (6.1) par le biais d'une boîte de vitesses.

5. Mécanisme cinématique selon l'une quelconque des revendications précédentes, dans lequel le combineur est fixé directement à l'élément denté de combineur (5.1).

6. Mécanisme cinématique selon l'une quelconque des revendications 1 à 4, dans lequel le combineur est fixé à l'élément denté de combineur (5.1), pour le mouvement du combineur, par une barre ou une tringlerie.

7. Mécanisme cinématique selon l'une quelconque des revendications précédentes, dans lequel le couvercle est fixé directement à l'élément denté de couvercle (6.1).

8. Mécanisme cinématique selon l'une quelconque des revendications 1 à 6, dans lequel le couvercle est fixé à l'élément denté de couvercle (6.1), pour le mouvement du couvercle, par une barre ou une tringlerie.

9. Mécanisme cinématique selon l'une quelconque des revendications précédentes, dans lequel l'élément denté en croix de Malte (7.1) est agencé en coopération avec l'élément denté de combineur (5.1) de telle sorte qu'un mouvement rotatif continu de l'élément denté de couvercle (6.1) soit transformé en un mouvement rotatif intermittent de l'élément denté en croix de Malte (7.1), ledit mouvement comprenant deux parties consécutives :
une première partie dans laquelle l'élément denté de couvercle (6.1) tourne et l'élément denté en croix de Malte (7.1) est statique, pour ouvrir et fermer le couvercle protecteur d'HUD (2) ;
une deuxième partie dans laquelle à la fois l'élément denté de couvercle (6.1) et l'élément denté en croix de Malte (7.1) tournent, pour ouvrir et fermer le couvercle protecteur d'HUD (2) et pour déplacer le combineur d'images d'HUD (1) entre une position rentrée et une position d'affichage d'images.

10. Mécanisme cinématique selon l'une quelconque des revendications précédentes, dans lequel l'élément denté en croix de Malte (7.1) comprend des rainures radiales et l'élément denté de couvercle (6.1) comprend une goupille (6.4a) destinée à s'insérer dans lesdites rainures de telle sorte que le mouvement rotatif de l'élément denté de couvercle (6.1) soit transformé en un mouvement rotatif intermittent de l'élément denté en croix de Malte (7.1).

11. Mécanisme cinématique selon la revendication précédente, dans lequel l'élément denté en croix de Malte (7.1) est agencé en coopération avec l'élément denté de combineur (5.1) de telle sorte que lorsque le combineur est dans la position d'affichage d'images, la goupille (6.1a) d'élément denté de couvercle (6.1) repose sensiblement à l'extrémité extérieure de la rainure de l'élément denté en croix de Malte (7.1).

12. Affichage tête haute, HUD, comprenant un combineur d'images d'HUD (1), un couvercle protecteur d'HUD (2) et un mécanisme cinématique pour un affichage tête haute selon l'une quelconque des revendications précédentes.

13. Affichage tête haute, HUD, selon la revendication précédente, comprenant
un mécanisme cinématique supplémentaire selon l'une quelconque des revendications 1 à 11 et
un arbre de moteur accouplant les éléments dentés de couvercle (6.1) des deux mécanismes cinématiques,
dans lequel lesdits mécanismes cinématiques sont agencés latéralement et symétriquement l'un par rapport à l'autre.

14. Affichage tête haute, HUD, selon la revendication précédente, comprenant :
un arbre de stabilisation accouplant les éléments dentés en croix de Malte (7.1) des deux mécanismes cinématiques ou
un arbre de stabilisation accouplant les éléments dentés de combineur (5.1) des deux mécanismes cinématiques.

15. Affichage tête haute, HUD, selon la revendication 12, comprenant
un mécanisme cinématique supplémentaire selon l'une quelconque des revendications 10 et 11,
un arbre de moteur accouplant les éléments dentés de couvercle (6.1) des deux mécanismes cinématiques et
un arbre de moteur accouplant les éléments dentés en croix de Malte (7.1) des deux mécanismes cinématiques,
dans lequel l'élément denté en croix de Malte (7.1) et l'élément denté de couvercle (6.1) desdits mécanismes cinématiques supplémentaires sont dépourvus de la rainure et de la goupille (6.1a) du mécanisme à croix de Malte, dans lequel lesdits mécanismes cinématiques sont agencés latéralement et symétriquement l'un par rapport à l'autre.

16. Affichage tête haute, HUD, selon l'une quelconque des revendications 12 à 15, dans lequel l'affichage tête haute, HUD, est un affichage tête haute à combineur, C-HUD.

17. Affichage tête haute, HUD, selon la revendication précédente, dans lequel l'affichage tête haute, HUD, est un affichage tête haute à combineur, C-HUD, d'automobile.

18. Tableau de bord de véhicule à moteur comprenant l'affichage tête haute, HUD, selon l'une quelconque des revendications 12 à 17.
